# EUROPEAN PATENT APPLICATION

(11) **EP 4 588 898 A1**
(43) Date of publication of application: **23.07.2025**
(21) Application number: 24152959.3
(22) Date of filing: 19.01.2024
(51) Int. Cl.: C02F 1/00, C02F 1/44

(54) **MICROFILTRATION FAUCET**

(71) Applicant: B/E Aerospace Inc., Winston Salem, NC 27105 (US)
(72) Inventor: MALABANAN, John Erick Dimatatac, San Pascual (PH)
(74) Representative: Dehns

(57) **Abstract**

A capsule for use in a water cleansing system is described herein comprising: a microfiltration membrane (40) and a filter screen (30). The water cleansing system may be a lavatory system in an aircraft.

## Description

### TECHNICAL FIELD

The present disclosure generally relates to water cleansing systems and in particular systems that that may be used in an aircraft.

### BACKGROUND

At present, water for use in faucets associated with lavatories in an aircraft is provided by a potable water tank. Cleaning agents such as Sanosil are often used in conjunction with such water supplies. The cleaning agent acts as a peroxide-based disinfectant that is made from a patented hydrogen peroxide/silver Sanosil and chlorine. Even though such cleaning agents are used, residue often remains in the tank and associated hoses or pipes, which may still provide health issues.

### BRIEF SUMMARY

The present disclosure is directed to a capsule for a water cleansing system, the capsule comprising a microfiltration membrane and a filter screen.

In some examples, the microfiltration membrane may comprise a membrane microfilter that is configured to eliminate any one or more of: bacteria, parasites, microplastics, sand, dirt and cloudiness in a water supply.

In some examples, the filter screen may be configured to eliminate large particles and/or rust.

A faucet is also described herein and said capsule may be provided in a hollow interior of the faucet.

A water supply is also described herein and the water supply may be connected to the faucet in use. The faucet may have an opening for releasing water that has passed from the water supply to the opening. The capsule may be positioned such that water passes through the filter screen before reaching the microfiltration membrane.

### BRIEF DESCRIPTION OF THE DRAWINGS

The present disclosure is illustrated and described herein with reference to the various drawings. Like reference numbers are used to denote like components/steps, as appropriate. Unless otherwise noted, components depicted in the drawings are not necessarily drawn to scale.
FIG. 1 shows a known water filter canister.
FIG. 2 shows the position of a known water filter canister in a lavatory area of an aircraft.
FIG.3 shows a new type of water cleansing system as described herein, in combination with a faucet.

### DETAILED DESCRIPTION

The present disclosure relates to water cleansing systems for the delivery of water to an outlet of a faucet from a water supply. Such systems may be used in different applications, however, the examples described herein may be used in the lavatory area of an aircraft, such that consumers can safely clean their hands after using the lavatory. Although this scenario is envisaged here, the water cleansing systems may also be used for other applications, e.g. in kitchens, campsites etc.

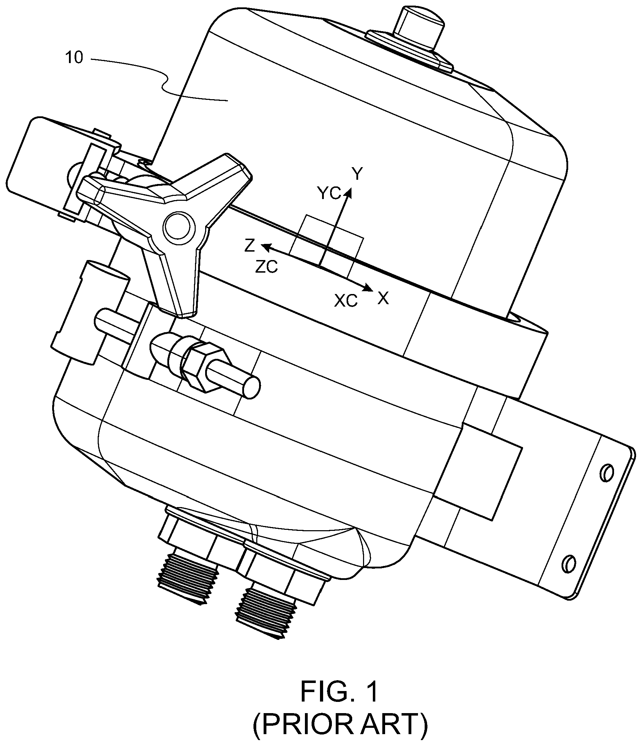

At present, in the lavatory area of an aircraft, water is provided to the faucet of a sink by a pipe or pipes that are connected to a potable water tank. The water is delivered, via the pipe or pipes, to the faucet. A water filter canister 10 is provided between the tank and the faucet, such that the water passes through the water filter canister 10 before reaching the faucet. A water filter canister is shown in figure 1. These known water filter canisters comprise an activated carbon filter (not shown) and have a shelf life of approximately one month. The date of the water filter canister 10 must be indicated on the canister when the canister is first used. Monthly maintenance must then take place and the filter must be changed in the aircraft galley plumbing system by an engineer. These water filter canisters 10 are relatively heavy and can weigh approximately 830g. They are also relatively expensive, particularly because they must be discarded and replaced every month.

With known plumbing systems using the water filter canister 10 of figure 1, the system experiences a pressure loss when the water passes through the water filter canister 10. This is due to the compacted filtration system that is provided inside the water filter canister 10. This can lead to issues with the water pressure not being high enough to allow the potable water to pass from the tank, through the water filter canister 10 and to the faucet. Current plumbing systems for lavatories, water tanks and faucets on an aircraft require the water to pass through the water filter canister 10 via branches of pipes. Such branched systems are more prone to dirt traps forming.

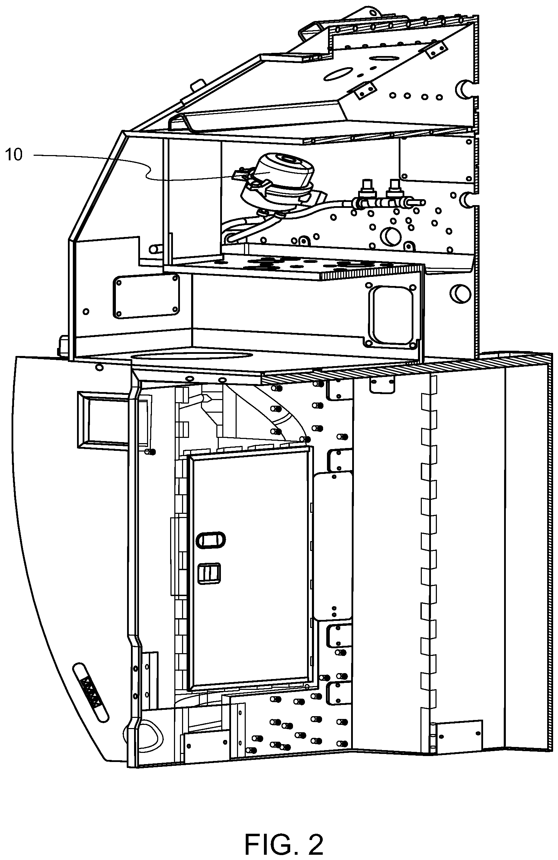

Figure 2 depicts a water canister filter 10 provided in the plumbing system of an aircraft.

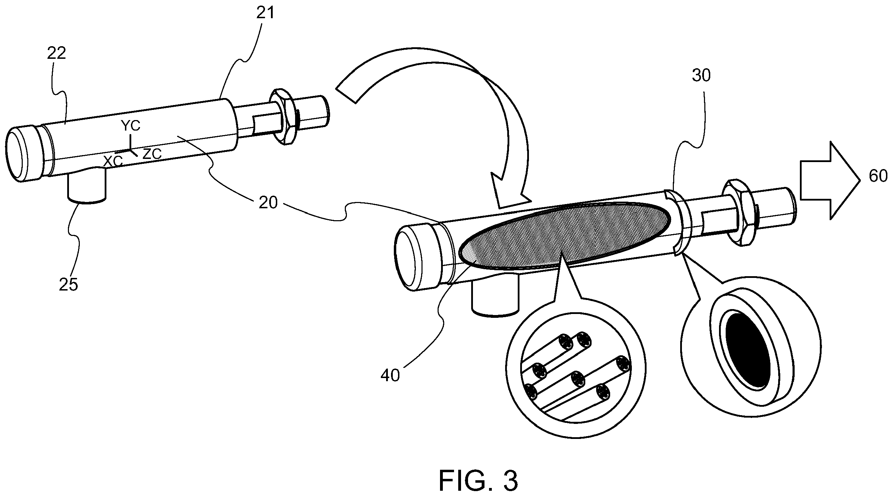

The systems for lavatories and faucets described herein and shown in figure 3 are able to eliminate the need for the traditional water filter and water cleaning processes. In the examples described herein, a new type of filtration process is provided. In some examples, the new system may be provided in the faucet itself.

The examples described herein utilize a new type of purification process, using an ultrafiltration (UF) membrane microfiltration that saves on maintenance and filter costs. The need for a standard water filter cannister 10 is also eliminated, thereby reducing costs and weight.

The new type of water cleansing and delivery systems that may be used with faucets will now be described in detail.

The primary function of a faucet is the supply of potable water from the water supply 60 to the consumer. Figure 3 is a schematic depicting a new type of faucet water cleansing system as described herein. In this example, a faucet 20 is shown. The faucet has a first end 21 which is connected to the water supply 60 via plumbing and an opposite end 22 which has an opening 25 for releasing water from the faucet 20 in use.

In this example the cleansing system is an elongated capsule that is provided in the faucet 20 itself. In other examples, however, the cleansing system may be provided in another part of the piping of the plumbing between the faucet 20 and the water supply 60.

The cleansing system provided in the capsule comprises a filter screen 30 that, wen provided in a faucet, is provided at the end of the faucet 20 that is closest to the water supply 60. A microfiltration/UF membrane filter 40 is also provided in a position between the filter screen 30 and the opening 25 of the faucet 20. In this way, water that is moving from the water supply 60 to the opening 25 of the faucet 20 must first pass through the filter screen 30 before passing through the UF membrane filter 40. The filter screen 30 may be configured to eliminate large particles present in the water supply, such as rust, silt, rocks etc. The filter screen 30 may also be configured to eliminate rust. The microfiltration/UF membrane 40 is configured to last from between one year to five years. The coarse filtering system may comprise a stainless steel mesh or a gauze having apertures that are sized and configured to filter out particles having a size larger than 0.05mm.

For sanitation and maintenance purposes it is possible to introduce the microfilter in the form of a filter capsule. The filter capsule may comprise a capsule containing the UF filter 40 and the filter screen 30. During maintenance, the capsule may therefore be easily removed and replaced. When being inserted into the faucet, the capsule is orientated as described above, such that the water that is moving from the water supply 60 to the opening 25 of the faucet 20 must first pass through the filter screen 30 before passing through the UF membrane filter 40.

In the example shown in figure 3, the faucet 20 comprises an elongated tube having a hollow internal region into which the capsule (containing the microfiltration membrane and filter screen 30) can be inserted and removed.

The microfiltration/UF membrane filter 40 comprises a membrane microfilter that is configured to protect against bacteria such as E.Coli and Salmonella, parasites such as Giardia and Cryptosporidium. The membrane may be further configured to protect against microplastics, sand, dirt, cloudiness etc. The membrane microfilter 40 is designed to last up to 1000 gallons, i.e. 4000 litres. That corresponds to approximately five years of daily use.

By positioning the capsule inside of the faucet 20 itself, pressure losses that may occur with known systems are reduced and the need for additional hoses and pipelines is eliminated. This improves the routing of the system. In addition to this, by combining the faucet and filter, it is possible to eliminate the need and therefore extra weight of the conventional filter 10. The new examples described herein also provide a reduced cost in comparison to known systems. Since the UF membrane microfiltration lasts more than a year, the occurrence of maintenance is also greatly reduced (known systems require monthly maintenance).

A safety precaution may be included to ensure that the consumption of water does not go above a predetermined level. For example, on lavatories, the use of a water filter can be eliminated and the filtration process inside the faucet can be used. This eliminates the residue of cleaning agents that are used in an aircraft water tank. This may provide a cost and weight reduction in comparison to known systems, thereby providing a globally competitive product.

In addition to the above, the examples described herein provide a safe and clean water supply.

Although the present disclosure has been illustrated and described herein with reference to various embodiments and examples, it will be readily apparent to those of ordinary skill in the art that other embodiments and examples may perform similar functions, achieve like results, and/or provide other advantages. Modifications, additions, or omissions may be made to the systems, apparatuses, and methods described herein without departing from the scope of the present disclosure. All equivalent or alternative embodiments that fall within the scope of the present disclosure are contemplated thereby and are intended to be covered by the following claims.

## Claims

1. A capsule for use in a water cleansing system comprising:
a microfiltration membrane (40),
and a filter screen (30).

2. The capsule of claim 1 wherein said microfiltration membrane (40) comprises a membrane microfilter that is configured to protect against any one or more of: bacteria, parasites, microplastics, sand, dirt and cloudiness.

3. The capsule of claim 1 or 2, wherein said filter screen (30) is configured to eliminate particles larger than 0.05mm present in the water supply (60) and/or rust.

4. A faucet (20) comprising a tube having a hollow interior; said capsule (20) of any preceding claim being provided within said hollow interior.

5. The faucet (20) of claim 4 and a water supply (60)
said water supply being connected to said faucet (20),
said faucet (20) having an opening (25) for releasing water from said water supply in use,
wherein said capsule is provided within said faucet (20) such that water passing from said water supply (60) to said opening (25) passes through said filter screen (30) before passing through said microfiltration membrane (40).
